# EUROPÄISCHE PATENTSCHRIFT

(11) **EP 3 158 848 B1**
(45) Veröffentlichungstag und Bekanntmachung des Hinweises auf die Patenterteilung: **24.10.2018**
(21) Anmeldenummer: 16188291.5
(22) Anmeldetag: 12.09.2016
(51) Int. Cl.: A01D 41/12, A01F 12/44

(54) **MÄHDRESCHER MIT REINIGUNGSENTLÜFTUNG DURCH EIN VON DER STROHHÄCKSLERWELLE ANGETRIEBENES SAUGGEBLÄSE**
COMBINE HARVESTER WITH CLEANING VENTILATION THROUGH A SUCTION FAN DRIVEN BY THE STRAW SHREDDER SHAFT
MOISSONNEUSE-BATTEUSE AVEC VENTILATION DE NETTOYAGE PAR VENTILATEUR ACTIONNÉ PAR L'ARBRE DU BROYEUR DE PAILLE

(30) Priorität: 21.10.2015 DE 102015220561
(43) Veröffentlichungstag der Anmeldung: 26.04.2017
(73) Patentinhaber: Deere & Company, Moline, IL 61265 (US)
(72) Erfinder: Pohlmann, Norbert, 47906 Kempen (DE); Weichholdt, Dirk, 57200 Woelfling les Sarreguemin (FR); Loutz, Eric, 57720 Erching Guiderkirch (FR); Priesnitz, Rico Guido, 66822 Lebach (DE); Peschel, Benjamin, 66497 Contwig (DE); Fries, Christina, 66625 Nohfelden (DE); Diessner, Gregor, 76889 Schweigen-Rechtenbach (DE); Mischler, Peter, 67659 Kaiserslautern (DE); Klein, Oliver, 66740 Saadlouis (DE); Lauer, Friedrich, 66894 Krähenberg (DE)
(74) Vertreter: Holst, Sönke

(56) Entgegenhaltungen:
- EP-A1- 0 631 717
- EP-A1- 1 177 719
- EP-A2- 1 754 408
- EP-A2- 1 869 969
- US-A1- 2015 230 408

## Beschreibung

Die Erfindung betrifft einen Mähdrescher mit einer tragenden Struktur, an deren Vorderseite ein Schrägförderer angebracht ist, einer innerhalb der tragenden Struktur angebrachten Dresch- und Trenneinrichtung, die einen Erntegutresteauslass umfasst, durch den Erntegutreste einem Strohhäcksler zuführbar sind, einer Reinigungseinrichtung, der von der Dresch- und Trenneinrichtung abgeschiedenes Korn zuführbar ist und welche mit einem Reinigungsgebläse zur Erzeugung eines Luftstroms und zumindest einem mit dem Luftstrom beaufschlagbaren, in eine Schwingbewegung versetzbaren Reinigungssieb zur Trennung von Korn und Spreu ausgestattet ist, sowie einer luftführenden Leitung, die sich zwischen einem bezüglich des Luftstroms stromabwärts des Reinigungssiebes angeordneten Einlass und einem Sauggebläse erstreckt.

### Technologischer Hintergrund

Landwirtschaftliche Mähdrescher sind große Maschinen, die landwirtschaftlich angebautes Erntegut, das Korn trägt, ernten, dreschen, trennen und reinigen. Das erhaltene saubere Korn wird in einem am Mähdrescher angeordneten Korntank gespeichert. Das ausgedroschene Stroh wird in der Regel entweder gehäckselt und über die Schneidwerksbreite auf dem Feld verteilt oder um den Strohhäcksler herum geleitet und in nicht gehäckselter Form in einem Schwad auf dem Feld abgelegt, um es später mit einer Ballenpresse aufnehmen zu können. Die am rückwärtigen Auslass der Reinigungseinrichtung verbleibenden Erntegutreste, wie Kaff und kleine Strohteile, werden durch einen Kaffstreuer auf dem Feld verteilt oder durch den Strohhäcksler geleitet und auf dem Feld verteilt.

Die Reinigung umfasst ein Reinigungsgebläse, das Außenluft ansaugt und die Luft dann von unten gegen Reinigungssiebe leitet, die in eine Schwingbewegung versetzt werden, sodass schwere Erntegutpartikel, insbesondere Körner, nach unten durch die Reinigungssiebe fallen und Verunreinigungen, wie Strohpartikel und Kaff, nach hinten weggeblasen werden. Es entsteht somit innerhalb der Reinigung ein Überdruck, d.h. es herrscht ein Luftdruck, der größer als der Umgebungsluftdruck ist. Der Reinigungswind wird im Stand der Technik zu einem relativ geringen Maß durch seitliche Gehäuseöffnungen des Mähdreschers an die Umgebung abgelassen, während der Hauptteil des Reinigungswindes durch den Strohhäcksler abgefördert wird (vgl. beispielsweise DE 196 24 733 A1 und DE 100 64 356 A1), wofür auch besondere Luftfördermittel, wie Luftschaufelbleche am Strohhäckslerrotor (DE 10 2006 017 789 A1) oder an Häckslermessern (DE 10 2004 049 965 A1) vorgesehen wurden.

Es wurde auch vorgeschlagen, im rückwärtigen Bereich des Mähdreschers zusätzliche Sauggebläse anzubringen, um den Reinigungswind abzusaugen und dem Strohhäcksler zuzuführen oder die Funktion des Sauggebläses dem Strohhäcksler zuzuordnen, d.h. den Reinigungswind ohne Verwendung eines separaten Sauggebläses durch separate Leitungen dem Strohhäcksler zuzuführen (vgl. die als gattungsbildend angesehene EP 1 177 719 A1).

Schließlich wurde vorgeschlagen, außerhalb des Gehäuses des Mähdreschers angeordnete Gebläse mit der Strohhäckslerwelle zu verbinden, die Außenluft ansaugen, welche das vom Strohhäcksler abgegebene Häckselgut auszutragen helfen sollen (EP 0 959 659 B1, EP 1 754 408 A2, US 2007/0066370 A1). Diese Gebläse haben keinen Einfluss auf den Luftdruck in der Reinigung.

### Problem

Falls der Luftdruck innerhalb der Reinigung zu groß wird, ist die vorgesehene Reinigungswirkung nicht mehr gewährleistet, da dann die durch den Konstrukteur beabsichtigten Strömungsverhältnisse des Reinigungswindes nicht mehr vorliegen. Soll allein der Strohhäcksler den Reinigungswind abfördern, wird ein großer Teil von dessen Antriebsleistung nur zur Luftförderung verbraucht. Die Ausführungsform der EP 1 177 719 A1, bei der ein separates Sauggebläse verwendet wird, hat den Nachteil, dass zu dessen Antrieb zugeordnete Antriebsstränge bereitzustellen sind. Zudem sind bei beiden Ausführungsformen Leitungen im Innenraum des Mähdreschers zwischen der Reinigung und dem Sauggebläse oder Strohhäcksler erforderlich, die schlecht zugänglich und deshalb nur schwer zu warten sind. Auch können diese Leitungen den Luftfluss innerhalb des Mähdreschers nachteilig beeinflussen.

Die der Erfindung zu Grunde liegende Aufgabe wird darin gesehen, einen Mähdrescher bereitzustellen, der die erwähnten Nachteile nicht oder in vermindertem Maße aufweist.

### Lösung

Die vorliegende Erfindung wird durch die Patentansprüche definiert.

Ein Mähdrescher ist mit einer tragenden Struktur, an deren Vorderseite ein Schrägförderer angebracht ist, einer innerhalb der tragenden Struktur angebrachten Dresch- und Trenneinrichtung, die einen Erntegutresteauslass umfasst, durch den Erntegutreste einem Strohhäcksler zuführbar sind, einer Reinigungseinrichtung, der von der Dresch- und Trenneinrichtung abgeschiedenes Korn zuführbar ist und welche mit einem Reinigungsgebläse zur Erzeugung eines Luftstroms und zumindest einem mit dem Luftstrom beaufschlagbaren, in eine Schwingbewegung versetzbaren Reinigungssieb zur Trennung von Korn und Spreu ausgestattet ist, sowie einer luftführenden Leitung versehen, die sich zwischen einem bezüglich des Luftstroms stromabwärts des Reinigungssiebes angeordneten Einlass und einem Sauggebläse erstreckt. Die luftführende Leitung befindet sich (zumindest zum Teil) an der Außenseite einer Seitenwand der Reinigungseinrichtung und das Sauggebläse ist koaxial zu einer Antriebswelle des Strohhäckslers angeordnet und steht mit der Antriebswelle des Strohhäckslers in Antriebsverbindung.

Auf diese Weise wird der Luftdruck stromab der Reinigungseinrichtung und somit auch innerhalb der Reinigungseinrichtung mit einfachen Mitteln reduziert, indem die Reinigungsluft stromab des Reinigungssiebes abgesaugt und durch eine außerhalb der Seitenwand der Reinigungseinrichtung angeordnete Leitung einem Sauggebläse zugeführt wird, das direkt durch die Antriebswelle des Strohhäckslers angetrieben wird. Der Strohhäcksler wird von der Aufgabe der Reinigungsluftabförderung entlastet, was seinen Energiebedarf reduziert. Die gewünschte Funktion der Reinigungseinrichtung wird demnach nicht mehr (oder weniger) durch ungewünschten Überdruck verschlechtert.

### Ausführungsbeispiel

Anhand der Abbildungen werden zwei Ausführungsbeispiele der Erfindung erläutert. Es zeigt:
- Fig. 1: eine teilgeschnittene seitliche Ansicht eines Mähdreschers mit einer Reinigungseinrichtung und einer luftführenden Leitung, die einen stromab der Reinigungseinrichtung liegenden Einlass mit einem auf der Antriebswelle des Strohhäckslers angeordneten Sauggebläse verbindet,
- Fig. 2: eine Draufsicht auf die Reinigungseinrichtung der Figur 1, und
- Fig. 3: eine Draufsicht auf eine zweite Ausführungsform der Reinigungseinrichtung der Figur 1.

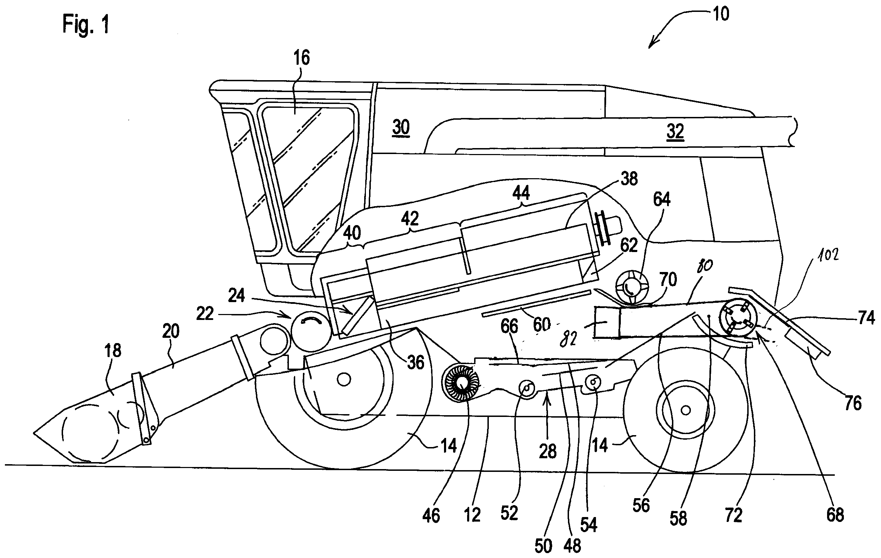

Die Figur 1 zeigt einen landwirtschaftlichen Mähdrescher 10 mit einem Fahrgestell 12 mit im Eingriff mit dem Boden befindlichen Rädern 14, die am Fahrgestell 12 befestigt sind und zum Vortrieb des Mähdreschers 10 in einer Vorwärtsrichtung dienen, die in der Figur 1 nach links verläuft. Der Betrieb des Mähdreschers 10 wird von der Bedienerkabine 16 aus kontrolliert. Ein Schneidwerk 18 wird verwendet, um Korn enthaltendes Erntegut zu ernten und es einem Schrägförderer 20 zuzuführen. Das geerntete Gut wird durch den Schrägförderer 20 einer Leittrommel 22 zugeführt. Die Leittrommel 22 leitet das Erntegut durch einen Einlassübergangsabschnitt 24 zu einer axialen Erntegutbearbeitungseinrichtung 26. Im Folgenden beziehen sich Richtungsangaben, wie vorn und hinten, auf die Vorwärtsrichtung des Mähdreschers 10, die in der Figur 1 nach links verläuft.

Die als Dresch- und Trenneinrichtung dienende Erntegutbearbeitungseinrichtung 26 umfasst ein Rotorgehäuse 34 und einen darin angeordneten Rotor 36. Der Rotor 36 umfasst eine hohle Trommel 38, an der Gutbearbeitungselemente für einen Beschickungsabschnitt 40, einen Dreschabschnitt 42 und einen Trennabschnitt 44 befestigt sind. Der Beschickungsabschnitt 40 ist an der Vorderseite der axialen Erntegutbearbeitungseinheit 26 angeordnet. In Längsrichtung stromab und rückwärtig des Beschickungsabschnitts 40 liegen der Dreschabschnitt 42 und der Trennabschnitt 44. Die Trommel 38 ist im Beschickungsabschnitt 40 kegelstumpfförmig. Der Dreschabschnitt 42 umfasst einen kegelstumpfförmigen vorderen Abschnitt und einen zylindrischen rückwärtigen Abschnitt. Am Ende der axialen Erntegutbearbeitungseinheit 26 befindet sich der zylindrische Trennabschnitt 44 der Trommel 38. Anstelle einer axialen Erntegutbearbeitungseinheit 26 kann auch eine tangentiale Dreschtrommel und eine ihr folgende axiale Trenneinrichtung oder ein der tangentialen Dreschtrommel folgender Strohschüttler verwendet werden.

Korn und Spreu, die durch einen dem Dreschabschnitt 42 zugeordneten Dreschkorb und ein dem Trennabschnitt 44 zugeordneten Trennrost fallen, werden durch einen vorderen Förderer (nicht gezeigt) und einen unterhalb des Trennabschnitts 44 angeordneten, rückwärtigen Förderboden 60 einem Vorsieb 66 einer Reinigungseinrichtung 28 zugeführt. Die Reinigungseinrichtung 28 umfasst ein Reinigungsgebläse 46 und in eine Schwingbewegung versetzbare Reinigungssiebe 48, 50, die als Lamellensiebe ausgeführt sein können. Das Reinigungssystem 28 entfernt die Spreu und führt das saubere Korn über einen Schneckenförderer 52 einem Elevator für sauberes Korn (nicht gezeigt) zu. Der Elevator für sauberes Korn legt das saubere Korn in einem Korntank 30 ab. Das saubere Korn im Korntank 30 kann durch einen Entladeschneckenförderer 32 auf einen Kornwagen, Anhänger oder Lastwagen entladen werden. Am rückwärtigen Ende des unteren Reinigungssiebs 50 verbleibendes Erntegut wird mittels eines Schneckenförderers 54 und eines Überkehrförderers (nicht gezeigt) wieder der Erntegutbearbeitungseinrichtung 26 oder einem separaten Nachdrescher zugeführt. Die am rückwärtigen Ende des oberen Reinigungssiebs 48 abgegebenen Erntegutreste, die im Wesentlichen aus Kaff (Spreu) und kleinen Strohteilchen bestehen, werden durch einen Schwingbodenförderer 56 nach hinten in einen Einlass 58 eines Strohhäckslers 68 gefördert.

Gedroschenes, den Trennabschnitt 44 verlassendes Stroh wird durch einen Auslass 62 aus der Erntegutbearbeitungseinrichtung 26 ausgestoßen und einer Auswurftrommel 64 zugeführt. Die mit einem darunter angeordneten Boden 70 zusammenwirkende Auswurftrommel 64 wirft das Stroh nach hinten aus, sodass es ebenfalls in den Einlass 58 des Strohhäckslers 68 gelangt. Der mit einem Häckslerboden 72, an dem Gegenmesser angebracht sein können, zusammenwirkende Strohhäcksler 68 wirft das Häckselgut nach hinten aus, wo es durch unterhalb eines Verteilerbodens 74 angeordnete Leitkufen 76 eines passiven Strohverteilers (oder nicht gezeigte Wurfgebläse) abgelenkt und seitlich über das Feld verteilt wird. Anders als gezeigt, kann noch eine Fördertrommel zwischen der Auswurftrommel 64 und dem Strohhäcksler 68 angeordnet werden und es kann eine Möglichkeit zur Schwadablage vorgesehen sein, bei der das Stroh oberhalb des Verteilerbodens 74 als Schwad auf das Feld abgegeben wird (vgl. DE 10 2008 001 460 A1).

Im Betrieb saugt das Reinigungsgebläse 46 Außenluft an und gibt diese nach hinten ab, um die Reinigungssiebe 48, 50 und 66 von unten und vorne her mit Reinigungsluft zu beaufschlagen. Zudem kann eine Fallstufe zwischen dem Reinigungssieb 66 und dem Reinigungssieb 48 mit Reinigungsluft beaufschlagt werden. Das Reinigungsgebläse 46 umfasst in an sich bekannter Weise (vgl. DE 10 2005 027 726 A1 und den dort erwähnten Stand der Technik) mehrere seitlich nebeneinander angeordnete Radiallüfter, die innerhalb zugehöriger Gehäuse angeordnet sind und durch eine gemeinsame Welle antreibbar sind. Die Gehäuse sind mit axialen Lufteinlassöffnungen versehen. Die Gehäuse bilden Windkanäle, die durch Seitenwände des Gehäuses zwischen den Radiallüftern begrenzt werden. Die Radiallüfter saugen demnach im Betrieb Luft von außen her durch die Lufteinlassöffnungen in axialer Richtung an und geben sie in die Windkanäle ab, um die Reinigungssiebe 48, 50 und 66 zu beaufschlagen.

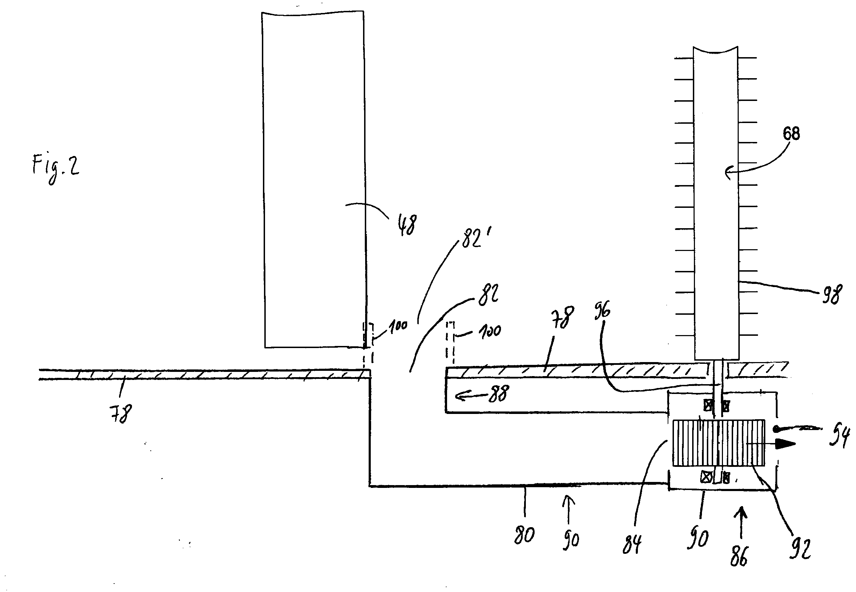

Die Reinigungseinrichtung 28 befindet sich innerhalb einer nach außen hin im Wesentlichen abgedichteten Umhüllung, die von der tragenden Struktur 12 gebildet wird. Das bedeutet, dass die vom Reinigungsgebläse 46 angesaugte Luft nur durch den Strohhäcksler 68 nach hinten hin aus dem Mähdrescher 10 entweichen kann und sich in bestimmten Betriebssituationen, insbesondere bei relativ großen Gutdurchsätzen, ein relativ hoher Überdruck innerhalb der Reinigungseinrichtung 28 aufbaut, der deren ordnungsgemäße Funktion beeinträchtigt. Es könnten zum Ablassen des Reinigungswindes in die Umgebung auch noch an sich bekannte, seitliche Öffnungen in den Seitenwänden 78 (vgl. Figur 2) vorgesehen sein, insbesondere oberhalb des Schwingbodenförderers 56, deren Wirkung sich jedoch in Grenzen hält. Es ist somit im Stande der Technik eine hinreichende Luftförderleistung des Strohhäckslers 68 bereitzustellen, um den Überdruck innerhalb der tragenden Struktur 12 des Mähdreschers 10 bezüglich des Luftstroms des Reinigungsgebläses 46 stromab der Reinigungseinrichtung 28 und somit auch in der Reinigungseinrichtung 28 in tolerablen Grenzen zu halten, ohne separate Sauggebläse bereitstellen zu müssen, um diesen Überdruck abzubauen.

Zur Verbesserung dieses Problems ist auf beiden Seiten des Mähdreschers 10 jeweils eine luftführende Leitung 80 vorgesehen, die sich zwischen einem bezüglich des Luftstroms stromabwärts des Reinigungssiebes angeordneten Einlass 82 und einem Lufteinlass 84 eines separaten Sauggebläses 86 erstreckt, um Luft des Reinigungsgebläses 46 stromab der Reinigungseinrichtung 28 und somit stromab der Reinigungssiebe 48, 54 aufzunehmen und an das Sauggebläse 86 zu führen (vgl. Figur 2). Der Einlass 82 befindet sich oberhalb des oberhalb des oberen Reinigungssiebs 48 und rückwärtig von dessen rückwärtigem Ende. Der Einlass 82 ist als Öffnung in der Seitenwand 78 der tragenden Struktur 12 ausgeführt. Der Einlass 82 kann, wie gezeigt, einen rechteckigen oder quadratischen Querschnitt oder einen beliebigen anderen Querschnitt aufweisen, z.B. kreisförmig sein.

Die luftführende Leitung 80 ist in der dargestellten Ausführungsform ein hohles Rohr oder ein rohrförmiger Schweißzusammenbau. Die luftführende Leitung 80 umfasst einen ersten Abschnitt 88, welcher sich an den Einlass 82 anschließt und quer zur Vorwärtsrichtung des Mähdreschers 10 orientiert ist. An den ersten Abschnitt 88 schließt sich ein zweiter, sich nach hinten erstreckender, zweiter Abschnitt 90 an, der am Lufteinlass 84 des Sauggebläses 86 in dessen Gehäuse 90 übergeht. Das Sauggebläse 86 umfasst einen beliebigen Lüfter 92, der hier als Radiallüfter dargestellt ist und Luft aus dem Einlass 82 absaugt und einen eventuell vorhandenen Überdruck in der Reinigungseinrichtung 28 vermindert. Die Luft wird schließlich durch das Sauggebläse 86 mittels eines Auslasses 94 nach hinten, oben, unten und/oder zur Seite hin abgegeben.

Der Antrieb des Lüfters 92 erfolgt durch eine Antriebswelle 96, die mit dem Rotor 98 des Strohhäckslers 68 verbunden ist. Der Antriebsstrang (in Figur 2 nicht gezeigte, vgl. jedoch EP 0 291 336 B1) des Strohhäckslers 68 treibt demnach auch den Lüfter 92 an, was einen separaten Antriebsstrang zu dessen Antrieb einspart. Die Lagerung der Antriebswelle 96 kann, wie in der Figur 2 gezeigt, innerhalb des Gehäuses 90 und/oder durch Lagerungen der Antriebswelle 96 innerhalb der Seitenwände 78 erfolgen.

Es wäre möglich, den Einlass 82' der Leitung 80 nach innen (in Richtung auf die Mitte des Mähdreschers 10) zu verlegen, wie durch den optionalen, in der Figur 2 gestrichelt eingezeichneten Ansaugstutzen 100 dargestellt ist, der sich an der Innenseite der Seitenwand 78 befindet.

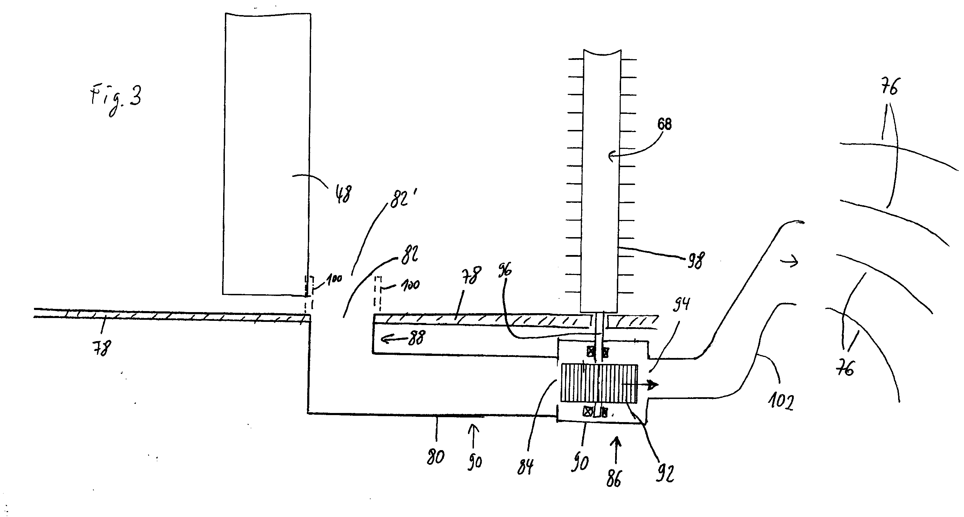

Bei der zweiten, in der Figur 3 gezeigten Ausführungsform ist der Auslass 94 auf die äußeren Leitkufen 76 gerichtet, um dort einen verstärkten Luftfluss bereitzustellen und den Auswurf des Häckselguts zur Seite hin zu fördern. Hierzu schließt sich an den Auslass 94 eine weitere Leitung 102 oder Düse an, die in der Figur 1 gestrichelt eingezeichnet ist und den vom Sauggebläse 86 erzeugten Luftstrom gezielt auf die vorderen Enden der äußeren Leitkufen 76 richtet. Der vom Sauggebläse 86 erzeugte Luftstrom dient demnach dazu, die Wurfweite des passiven Strohverteilers zu vergrößern. Wenn anstelle des mit den Leitkufen 76 ausgestatteten, passiven Strohverteilers angetriebene Wurfgebläse treten, würde der Luftstrom aus der weiteren Leitung 102, von denen auf jeder Seite des Mähdreschers 10 eine angeordnet ist, eingangsseitig in jeweils eines der Wurfgebläse geleitet und auch dessen Wirkung verbessern bzw. dessen Antriebsleistung bei gegebener Wurfweite vermindern.

## Patentansprüche

1. Mähdrescher (10) mit einer tragenden Struktur (12), an deren Vorderseite ein Schrägförderer (20) angebracht ist, einer innerhalb der tragenden Struktur (12) angebrachten Dresch- und Trenneinrichtung, die einen Erntegutresteauslass umfasst, durch den Erntegutreste einem Strohhäcksler (68) zuführbar sind, einer Reinigungseinrichtung (28), der von der Dresch- und Trenneinrichtung abgeschiedenes Korn zuführbar ist und welche mit einem Reinigungsgebläse (46) zur Erzeugung eines Luftstroms und zumindest einem mit dem Luftstrom beaufschlagbaren, in eine Schwingbewegung versetzbaren Reinigungssieb (48, 50, 66) zur Trennung von Korn und Spreu ausgestattet ist, sowie einer luftführenden Leitung (80), die sich zwischen einem bezüglich des Luftstroms stromabwärts des Reinigungssiebes (48, 50, 66) angeordneten Einlass (82) und einem Sauggebläse (86) erstreckt, **dadurch gekennzeichnet, dass** sich die luftführende Leitung (80) an der Außenseite einer Seitenwand (78) der Reinigungseinrichtung (28) befindet und dass das Sauggebläse (86) koaxial zu einer Antriebswelle (96) des Strohhäckslers (68) angeordnet ist und mit ihr in Antriebsverbindung steht.

2. Mähdrescher (10) nach Anspruch 1, wobei sich an einen Auslass (94) des Sauggebläses (86) eine weitere Leitung (102) anschließt, welche ausgelegt ist, den vom Sauggebläse (86) erzeugten Luftstrom auf die vorderen Enden von äußeren Leitkufen (76) eines stromab des Strohhäckslers (68) angeordneten, passiven Strohverteilers oder in den Einlass eines stromab des Strohhäckslers (68) angeordneten, angetriebenen Wurfgebläses zu leiten.

3. Mähdrescher (10) nach Anspruch 1 oder 2, wobei an der Innenseite der Seitenwand (78) ein Ansaugstutzen (100) angeordnet ist, der mit der luftführenden Leitung (80) verbunden ist.

## Claims

1. Combine harvester (10) with a supporting structure (12), to the front side of which a feeder house (20) is attached, a threshing and separating device which is attached inside the supporting structure (12) and comprises a crop residue outlet through which crop residues can be supplied to a straw chopper (68), a cleaning device (28) to which grain separated by the threshing and separating device can be supplied and which is provided with a cleaning blower (46) for generating an air flow, and with at least one cleaning screen (48, 50, 66), which can be acted upon with the airflow and can be set into an oscillating movement in order to separate grain and chaff, and an air-conducting line (80) which extends between an inlet (82) arranged downstream of the cleaning screen (48, 50, 66) with respect to the air flow and a suction blower (86), **characterized in that** the air-conducting line (80) is located on the outer side of a side wall (78) of the cleaning device (28), and **in that** the suction blower (86) is arranged coaxially with respect to a drive shaft (96) of the straw chopper (68) and is connected to said drive shaft in terms of drive.

2. Combine harvester (10) according to Claim 1, wherein an outlet (94) of the suction blower (86) is adjoined by a further line (102) which is configured to direct the air flow, which is generated by the suction blower (86), onto the front ends of outer guide runners (76) of a passive straw distributor arranged downstream of the straw chopper (68) or into the inlet of a driven ejector blower arranged downstream of the straw chopper (68).

3. Combine harvester (10) according to Claim 1 or 2, wherein a suction nozzle (100) which is connected to the air-conducting line (80) is arranged on the inner side of the side wall (78).

## Revendications

1. Moissonneuse-batteuse (10) comportant une structure porteuse (12) au niveau du côté avant de laquelle est monté un convoyeur oblique (20), un dispositif de battage et de séparation monté à l'intérieur de la structure porteuse (12), qui comprend une sortie pour les résidus de moisson, par lequel les résidus de moisson peuvent être acheminés à un broyeur de paille (68), un dispositif de nettoyage (28) auquel peut être acheminé le grain séparé par le dispositif de battage et de séparation et qui est muni d'une soufflante de nettoyage (46) destinée à produire un courant d'air et d'au moins un tamis de nettoyage (48, 50, 66) pouvant être sollicité avec le courant d'air, pouvant être mis en mouvement d'oscillation pour séparer le grain et la glume, ainsi qu'une conduite de guidage d'air (80) qui s'étend entre une entrée (82) disposée par rapport au courant d'air en aval du tamis de nettoyage (48, 50, 66) et une soufflante d'aspiration (86), **caractérisée en ce que** la conduite de guidage d'air (80) se trouve au niveau du côté extérieur d'une paroi latérale (78) du dispositif de nettoyage (28) et **en ce que** la soufflante d'aspiration (86) est disposée coaxialement à un arbre d'entraînement (96) du broyeur de paille (68) et est en liaison d'entraînement avec ledit arbre d'entraînement.

2. Moissonneuse-batteuse (10) selon la revendication 1, dans laquelle une conduite supplémentaire (102) se raccorde à une sortie (94) de la soufflante d'aspiration (86), laquelle est conçue pour conduire le courant d'air généré par la soufflante d'aspiration (86) vers les extrémités avant de patins de guidage extérieurs (76) d'un distributeur de paille passif disposé en aval du broyeur de paille (68), ou dans l'entrée d'une soufflante d'éjection entraînée, disposée en aval du broyeur de paille (68).

3. Moissonneuse-batteuse (10) selon la revendication 1 ou 2, dans laquelle une tubulure d'aspiration (100) est disposée au niveau du côté intérieur de la paroi latérale (78), laquelle est connectée à la conduite de guidage d'air (80).
